# EUROPÄISCHE PATENTSCHRIFT

(11) **EP 3 393 868 B1**
(45) Veröffentlichungstag und Bekanntmachung des Hinweises auf die Patenterteilung: **27.05.2020**
(21) Anmeldenummer: 16819514.7
(22) Anmeldetag: 16.12.2016
(51) Int. Cl.: B60S 1/52, B60S 1/38

(54) **WISCHERVORRICHTUNG**
WIPER DEVICE
DISPOSITIF D'ESSUIE-GLACE

(30) Priorität: 22.12.2015 DE 102015226527
(43) Veröffentlichungstag der Anmeldung: 31.10.2018
(73) Patentinhaber: Robert Bosch GmbH, 70442 Stuttgart (DE)
(72) Erfinder: DEPONDT, Helmut, 3370 Boutersem (BE)
(86) Internationale Anmeldenummer: PCT/EP2016/081461
(87) Internationale Veröffentlichungsnummer: WO 2017/108616

(56) Entgegenhaltungen:
- EP-A1- 3 002 168
- EP-A1- 3 012 163
- EP-A1- 3 138 743
- EP-A2- 2 692 596
- DE-A1-102010 025 687
- FR-A1- 3 003 220
- US-A1- 2015 183 405

## Beschreibung

### Stand der Technik

Es ist bereits eine Wischervorrichtung vorgeschlagen worden, welche einen Wischblattadapter aufweist. Der Wischblattadapter weist ein erstes Wischblattadapterelement und ein zweites Wischblattadapterelement auf, welche in einem montierten Zustand miteinander verbunden sind. Eine Sprüheinheit der Wischervorrichtung ist in dem montierten Zustand seitlich an dem zweiten Wischblattadapterelement angeordnet.

Aus der EP 269 25 96 A2 und der DE 140 2010 025 687 A1 ist weiterer Stand der Technik bekannt. EP 3.012.163 ist als Stand der Technik gemäß Art. 54(3) EPÜ genannt.

### Offenbarung der Erfindung

Die Erfindung geht aus von einer Wischervorrichtung mit einem Wischblattadapter, welcher zumindest ein erstes Wischblattadapterelement, das insbesondere zu einer Verbindung, insbesondere zu einer direkten und/oder indirekten Verbindung, mit zumindest einem Wischblattbauteil, insbesondere zumindest einer Federschiene, vorgesehen ist, und zumindest ein zweites Wischblattadapterelement aufweist, welches in wenigstens einem montierten Zustand mit dem ersten Wischblattadapterelement verbunden, insbesondere schwenkbar relativ zu dem ersten Wischblattadapterelement gelagert, und zu einer Verbindung mit zumindest einem Wischarmadapter vorgesehen ist und welches insbesondere in dem montierten Zustand das erste Wischblattadapterelement wenigstens teilweise umgreift, und mit einer Sprüheinheit, welche insbesondere dazu vorgesehen ist, Waschwasser auf eine zu wischende Scheibe aufzusprühen.

Es wird vorgeschlagen, dass die Sprüheinheit in dem montierten Zustand wenigstens teilweise zwischen dem ersten Wischblattadapterelement und dem zweiten Wischblattadapterelement angeordnet ist. Unter einer "Wischervorrichtung" soll insbesondere zumindest ein Teil, insbesondere eine Unterbaugruppe, eines Wischers verstanden werden, wobei insbesondere zusätzlich auch Zubehöreinheiten für den Wischer umfasst sein können. Insbesondere kann die Wischervorrichtung auch den gesamten Wischer umfassen. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Das Wischblattbauteil könnte beispielsweise eine Federschiene und/oder eine Spoilereinheit und/oder eine Endkappeneinheit und/oder eine Wischleisteneinheit sein. Unter einem "Wischblattadapterelement" soll insbesondere ein Bauteil eines Wischblattadapters verstanden werden, welches insbesondere in wenigstens einem demontierten Zustand relativ zu einem weiteren Bauteil des Wischblattadapters beweglich, insbesondere frei beweglich, ist. Das erste Wischblattadapterelement ist insbesondere zu einer Kopplung mit dem Wischblattbauteil vorgesehen und weist insbesondere zumindest einen Kopplungsbereich zu einer Kopplung mit dem Wischblattbauteil auf. Insbesondere ist das erste Wischblattadapterelement dazu vorgesehen, in dem montierten Zustand unverlierbar mit dem Wischblattbauteil gekoppelt zu sein. Beispielsweise könnte das erste Wischblattadapterelement zu einer Kopplung mit dem Wischblattbauteil über eine Schweißverbindung und/oder über eine Ultraschallschweißverbindung und/oder über eine Rastverbindung vorgesehen sein. Das erste Wischblattadapterelement weist insbesondere zumindest einen Lagerbolzen auf, welcher zu einer schwenkbaren Lagerung des zweiten Wischblattadapterelements an dem ersten Wischblattadapterelement vorgesehen ist. Das zweite Wischblattadapterelement ist insbesondere dazu vorgesehen, in dem montierten Zustand unverlierbar mit dem ersten Wischblattadapterelement gekoppelt zu sein. In dem montierten Zustand ist das zweite Wischblattadapterelement insbesondere schwenkbar an dem Lagerbolzen des ersten Wischblattadapterelements gekoppelt und/oder angeordnet und insbesondere um eine durch den Lagerbolzen verlaufende Schwenkachse relativ zu dem ersten Wischblattadapterelement schwenkbar gelagert. Das erste Wischblattadapterelement ist in dem montierten Zustand wenigstens teilweise innerhalb des zweiten Wischblattadapterelements angeordnet und/oder wenigstens teilweise von dem zweiten Wischblattadapterelement umgriffen und/oder umgeben. Vorteilhaft ist das erste Wischblattadapterelement einstückig ausgebildet. Vorteilhaft ist das zweite Wischblattadapterelement einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Insbesondere weist die Wischervorrichtung den Wischarmadapter auf. Unter einem "Wischarmadapter" soll in diesem Zusammenhang insbesondere ein Adapter verstanden werden, der einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit einem Wischblattadapter, insbesondere mit einem Wischblattadapterelement des Wischblattadapters, bereitzustellen. Das zweite Wischblattadapterelement ist in dem montierten Zustand insbesondere mit dem Wischarmadapter gekoppelt. Insbesondere ist der Wischarmadapter in dem montierten Zustand drehfest an dem zweiten Wischblattadapterelement gekoppelt und insbesondere durch die drehfeste Kopplung des Wischarmadapters an dem zweiten Wischblattadapterelement schwenkbar relativ zu dem ersten Wischblattadapterelement gelagert. Unter einer "Sprüheinheit" soll in diesem Zusammenhang insbesondere eine Einheit verstanden werden, die zumindest ein Düsenelement aufweist. Unter einem "Düsenelement" soll insbesondere ein Element verstanden werden, das dazu vorgesehen ist, eine Flüssigkeit, wie insbesondere Waschwasser zur Reinigung einer zu wischenden Scheibe, insbesondere einer zu wischenden Fahrzeugscheibe, in eine bestimmte Sprührichtung zu sprühen. Gemäß der Erfindung weist das Düsenelement zumindest eine Düsenöffnung auf, die ein Waschwassersystem zu einer Umgebung hin öffnet. Das Düsenelement kann aus einem Metall und/oder besonders vorteilhaft aus einem Kunststoff hergestellt sein. Bevorzugt ist das Düsenelement dazu vorgesehen, mit einer Waschwasserkanaleinheit, insbesondere mit einem Kanalelement der Waschwasserkanaleinheit und/oder mit einem Waschwasserschlauch der Waschwasserkanaleinheit, gekoppelt zu werden. In dem montierten Zustand ist die Sprüheinheit insbesondere zumindest in einer wenigstens im Wesentlichen senkrecht zu der zu wischenden Scheibe ausgerichteten Richtung zwischen dem ersten Wischblattadapterelement und dem zweiten Wischblattadapterelement angeordnet. Ausgehend von der zu wischenden Scheibe schneidet eine geradlinige Verbindung, welche insbesondere das erste Wischblattadapterelement und das zweite Wischblattadapterelement miteinander verbindet, zunächst das erste Wischblattadapterelement, anschließend die Sprüheinheit und danach das zweite Wischblattadapterelement. Es existiert insbesondere zumindest eine insbesondere beliebige Ebene, in welcher die Sprüheinheit bezüglich eines Mittelpunkts und/oder Schwerpunkts der Sprüheinheit von den Wischblattadapterelementen über einen Winkelbereich von mindestens 90°, insbesondere von mindestens 180°, vorteilhaft von mindestens 270°, besonders vorteilhaft von mindestens 300° und vorzugsweise von mindestens 330° umgeben ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Gemäß der Erfindung ist die Sprüheinheit in dem montierten Zustand mit dem zweiten Wischblattadapterelement verbunden und im Wesentlichen von allen Seiten von den Wischblattadapterelementen umgeben.

Durch die erfindungsgemäße Ausgestaltung der Wischervorrichtung können insbesondere vorteilhafte Betriebseigenschaften erreicht werden. Insbesondere kann die Sprüheinheit geschützt angeordnet werden, wodurch insbesondere eine Beschädigung der Sprüheinheit vermieden werden kann. Auf weitere Bauteile zu einer Anordnung und/oder Befestigung der Sprüheinheit kann insbesondere verzichtet werden. Insbesondere kann eine kompakte Ausgestaltung bereitgestellt werden.

Gemäß einer nicht beanspruchten Ausführungsform könnte die Sprüheinheit in dem montierten Zustand mit dem ersten Wischblattadapterelement insbesondere unmittelbar verbunden und insbesondere an dem ersten Wischblattadapterelement insbesondere unmittelbar befestigt sein. Gemäß der Erfindung ist die Sprüheinheit in dem montierten Zustand mit dem zweiten Wischblattadapterelement insbesondere unmittelbar verbunden und vorteilhaft unmittelbar an dem zweiten Wischblattadapterelement befestigt. Die Sprüheinheit ist in dem montierten Zustand insbesondere drehfest mit dem zweiten Wischblattadapterelement verbunden und vorteilhaft drehfest an dem zweiten Wischblattadapterelement befestigt. Dadurch kann die Sprüheinheit insbesondere besonders geeignet zwischen dem ersten Wischblattadapterelement und dem zweiten Wischblattadapterelement angeordnet werden.

Die Sprüheinheit könnte in dem montierten Zustand beispielsweise mittels einer Schweißverbindung und/oder mittels einer Ultraschallschweißverbindung und/oder mittels einer durch Einhaken bewirkten Verbindung und/oder mittels einer durch Verriegelung bewirkten Verbindung und/oder mittels einer Schnappverbindung mit dem zweiten Wischblattadapterelement verbunden und insbesondere mittels dieser Verbindung an dem zweiten Wischblattadapterelement befestigt sein. Vorzugsweise ist die Sprüheinheit in dem montierten Zustand mit dem zweiten Wischblattadapterelement mittels einer Rastverbindung verbunden und insbesondere mittels der Rastverbindung an dem zweiten Wischblattadapterelement befestigt. Beispielsweise könnte das zweite Wischblattadapterelement zumindest ein insbesondere federelastisches Rastelement aufweisen, welches insbesondere dazu vorgesehen sein könnte, bei einem Befestigungsvorgang elastisch ausgelenkt zu werden, um anschließend durch eine innere Spannkraft hinter einem korrespondierenden Rastelement der Sprüheinheit einzurasten. Alternativ oder zusätzlich könnte die Sprüheinheit zumindest ein insbesondere federelastisches Rastelement aufweisen, welches insbesondere dazu vorgesehen sein könnte, bei einem Befestigungsvorgang elastisch ausgelenkt zu werden, um anschließend durch eine innere Spannkraft hinter einem korrespondierenden Rastelement des zweiten Wischblattadapterelements einzurasten. Dadurch kann die Verbindung zwischen der Sprüheinheit und dem zweiten Wischblattadapterelement insbesondere besonders schnell hergestellt und/oder gelöst werden, wodurch insbesondere eine einfache Montage und/oder Demontage der Sprüheinheit ermöglicht werden kann.

Weiterhin wird vorgeschlagen, dass das erste Wischblattadapterelement zumindest einen ersten Aufnahmebereich definiert, der dazu vorgesehen ist, in dem montierten Zustand zumindest einen Teil der Sprüheinheit aufzunehmen. Der erste Aufnahmebereich ist insbesondere wenigstens teilweise von dem ersten Wischblattadapterelement begrenzt und/oder definiert. Insbesondere bildet das erste Wischblattadapterelement in dem montierten Zustand zumindest eine seitliche und insbesondere zumindest eine untere Begrenzung des ersten Aufnahmeraums aus. Die Sprüheinheit ist in dem montierten Zustand insbesondere wenigstens zu einem Teil in dem ersten Aufnahmeraum angeordnet. Dadurch kann insbesondere eine geschützte und/oder sichere Anordnung der Sprüheinheit erzielt werden.

Ferner wird vorgeschlagen, dass das zweite Wischblattadapterelement zumindest einen zweiten Aufnahmebereich definiert, der dazu vorgesehen ist, in dem montierten Zustand zumindest einen Großteil der Sprüheinheit aufzunehmen. Der zweite Aufnahmebereich ist insbesondere wenigstens teilweise und vorteilhaft wenigstens zu einem Großteil von dem zweiten Wischblattadapterelement begrenzt und/oder definiert. Insbesondere bildet das zweite Wischblattadapterelement in dem montierten Zustand zumindest eine seitliche, vorteilhaft zumindest zwei seitliche, besonders vorteilhaft zumindest drei seitliche und vorzugsweise zumindest eine obere Begrenzung/Begrenzungen des zweiten Aufnahmeraums aus. Die Sprüheinheit ist in dem montierten Zustand insbesondere wenigstens zu einem Großteil in dem zweiten Aufnahmeraum angeordnet. In dem montierten Zustand bilden und/oder definieren das erste Wischblattadapterelement und das zweite Wischblattadapterelement insbesondere einen Gesamtaufnahmeraum, welcher insbesondere den ersten Aufnahmeraum und den zweiten Aufnahmeraum umfasst. Dadurch kann die Sprüheinheit insbesondere besonders vorteilhaft gelagert werden.

Die Sprüheinheit könnte in dem montierten Zustand insbesondere wenigstens zu einem Großteil in einer Vertikalrichtung oberhalb des ersten Wischblattadapterelements angeordnet sein. Vorzugsweise ragt die Sprüheinheit in dem montierten Zustand in einer Wischblattlängsrichtung wenigstens teilweise über das erste Wischblattadapterelement hinaus. Die Sprüheinheit und insbesondere das zweite Wischblattadapterelement ragen/ragt in dem montierten Zustand in der Wischblattlängsrichtung insbesondere an einem dem Wischarmadapter abgewandten Bereich des Wischblattadapters wenigstens teilweise über das erste Wischblattadapterelement hinaus. Die Wischblattlängsrichtung ist insbesondere wenigstens im Wesentlichen senkrecht zu einer Wischrichtung ausgerichtet. Die Wischblattlängsrichtung ist insbesondere wenigstens im Wesentlichen parallel zu einer zu wischenden Scheibe ausgerichtet. Dadurch können insbesondere Sprüheinheiten unterschiedlicher Größe in dem Wischblattadapter aufgenommen und/oder eine hohe Flexibilität erzielt werden. Insbesondere kann ein ungehindertes Aufsprühen von Waschwasser auf die zu wischende Scheibe ermöglicht und/oder auf eine Ausnehmung in dem ersten Wischblattadapterelement verzichtet werden.

Weiterhin wird vorgeschlagen, dass das erste Wischblattadapterelement zumindest eine Durchgriffsausnehmung für zumindest eine Waschwasserkanaleinheit aufweist. Insbesondere begrenzt das erste Wischblattadapterelement die Durchgriffsausnehmung. Die Durchgriffsausnehmung ist insbesondere eine Öffnung und/oder ein Loch und/oder eine Aussparung in einer Wandung des ersten Wischblattadapterelements, insbesondere in einer seitlichen Begrenzung des ersten Aufnahmeraums. In dem montierten Zustand ist die Durchgriffsausnehmung insbesondere an einem in der Wischblattlängsrichtung dem Wischarmadapter zugewandten Bereich des ersten Wischblattadapterelements angeordnet. Die Wischervorrichtung weist insbesondere die Waschwasserkanaleinheit auf. Insbesondere greift und/oder ragt die Waschwasserkanaleinheit in dem montierten Zustand, insbesondere zu einer Verbindung mit der Sprüheinheit, wenigstens teilweise durch die Durchgriffsausnehmung hindurch. Unter einer "Waschwasserkanaleinheit" soll insbesondere eine Einheit verstanden werden, die in wenigstens einem Betriebszustand zumindest einen Kanal ausbildet und zu einer Durchführung von Flüssigkeit, insbesondere von Waschwasser, durch den Kanal vorgesehen ist. Unter einem "Kanal" soll insbesondere ein geometrisches Element verstanden werden, das in wenigstens einem Betriebszustand zu einer Durchführung von Flüssigkeit, insbesondere von Waschwasser, vorgesehen ist. Unter der Wendung, dass die Waschwasserkanaleinheit in wenigstens einem Betriebszustand zu einer "Durchführung von Flüssigkeit" vorgesehen ist, soll insbesondere verstanden werden, dass die Waschwasserkanaleinheit in dem Betriebszustand dazu vorgesehen ist, die an einem Ende der Waschwasserkanaleinheit ankommende Flüssigkeit von dem einen Ende der Waschwasserkanaleinheit an ein dem einen Ende der Waschwasserkanaleinheit entgegengesetztes Ende der Waschwasserkanaleinheit zu transportieren, wobei die Flüssigkeit, insbesondere das Waschwasser, insbesondere die Waschwasserkanaleinheit durchströmt. Dadurch kann die Waschwasserkanaleinheit insbesondere auf kürzestem Weg mit der Sprüheinheit verbunden werden, wodurch insbesondere eine kompakte Ausgestaltung erzielt werden kann.

Ferner wird vorgeschlagen, dass die Wischervorrichtung den Wischarmadapter und zumindest eine Waschwasserkanaleinheit aufweist, welche in wenigstens einem montierten Zustand zumindest in einem der Sprüheinheit insbesondere in der Wischblattlängsrichtung zugewandten Endbereich des Wischarmadapters fest, insbesondere starr und/oder unbeweglich, in dem Wischarmadapter angeordnet ist. Die Waschwasserkanaleinheit ist insbesondere zu einer Verbindung mit der Sprüheinheit vorgesehen. Insbesondere ist die Waschwasserkanaleinheit dazu vorgesehen, bei einer Montage des Wischarmadapters an dem Wischblattadapter automatisch, insbesondere selbsttätig und/oder unter Vermeidung einer gezielten, insbesondere an der Sprüheinheit und/oder an der Waschwasserkanaleinheit vorgenommenen Handlung eines Bedieners, mit der Sprüheinheit verbunden zu werden. Beispielsweise könnte die Waschwasserkanaleinheit außerhalb des Wischarmadapters angeordnet und insbesondere seitlich an dem Wischarmadapter befestigt sein. Insbesondere ist die Waschwasserkanaleinheit innerhalb des Wischarmadapters angeordnet und insbesondere zumindest in dem der Sprüheinheit zugewandten Endbereich starr und/oder unbeweglich relativ zu dem Wischarmadapter angeordnet. Die Waschwasserkanaleinheit ist in dem montierten Zustand zumindest in dem der Sprüheinheit zugewandten Endbereich insbesondere mittelbar und/oder unmittelbar mit dem Wischarmadapter verbunden. Dadurch kann insbesondere eine leichte Zugänglichkeit der Waschwasserkanaleinheit und/oder eine einfache Herstellung einer Verbindung zwischen der Waschwasserkanaleinheit und der Sprüheinheit erreicht werden.

Beispielsweise könnte die Sprüheinheit zumindest zwei und vorteilhaft zumindest drei Düsenelemente aufweisen, welche dazu vorgesehen sein könnten, Waschwasser in unterschiedliche Richtungen zu versprühen. Vorzugsweise weist die Sprüheinheit zumindest vier, insbesondere zumindest fünf und vorteilhaft zumindest sechs Düsenelemente auf, welche dazu vorgesehen sind, Waschwasser in unterschiedliche Richtungen zu versprühen. Insbesondere sind in dem montierten Zustand in der Wischrichtung zumindest zwei und vorteilhaft zumindest drei Düsenelemente auf einer ersten Seite der Sprüheinheit angeordnet. Die auf der ersten Seite der Sprüheinheit angeordneten Düsenelemente weisen insbesondere verschieden ausgerichtete Sprührichtungen auf, welche mit der Wischrichtung insbesondere verschiedene minimale Winkel einschließen. Insbesondere sind die auf der ersten Seite der Sprüheinheit angeordneten Düsenelemente in der Wischblattlängsrichtung benachbart zueinander angeordnet. Insbesondere sind in dem montierten Zustand in der Wischrichtung zumindest zwei und vorteilhaft zumindest drei Düsenelemente auf einer zweiten, der ersten Seite in der Wischrichtung gegenüberliegenden Seite der Sprüheinheit angeordnet. Die auf der zweiten Seite der Sprüheinheit angeordneten Düsenelemente weisen insbesondere verschieden ausgerichtete Sprührichtungen auf, welche mit der Wischrichtung insbesondere verschiedene minimale Winkel einschließen. Insbesondere sind die auf der zweiten Seite der Sprüheinheit angeordneten Düsenelemente in der Wischblattlängsrichtung benachbart zueinander angeordnet. Dadurch kann insbesondere eine optimale Reinigung der zu wischenden Scheibe erzielt werden. Insbesondere kann eine Vielzahl von Richtungen abgedeckt werden und insbesondere bei jeglicher Wischbewegung Waschwasser gezielt in Bewegungsrichtung vor ein sich bewegendes Wischblatt gesprüht werden.

Besonders vorteilhafte Betriebseigenschaften können erreicht werden durch einen Wischer mit zumindest einer erfindungsgemäßen Wischervorrichtung.

Die Betriebseigenschaften können insbesondere weiter verbessert werden durch ein Verfahren zu einer Montage zumindest einer erfindungsgemäßen Wischervorrichtung, mit einem Wischblattadapter, welcher zumindest ein erstes Wischblattadapterelement und zumindest ein zweites Wischblattadapterelement aufweist, welches mit dem ersten Wischblattadapterelement verbunden wird und welches zu einer Verbindung mit zumindest einem Wischarmadapter vorgesehen ist, und mit einer Sprüheinheit, wobei die Sprüheinheit wenigstens teilweise zwischen dem ersten Wischblattadapterelement und dem zweiten Wischblattadapterelement angeordnet wird.

Die erfindungsgemäße Wischervorrichtung soll hierbei nicht auf die oben beschriebene Anwendung und Ausführungsform beschränkt sein. Insbesondere kann die erfindungsgemäße Wischervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Wischer mit einer erfindungsgemäßen Wischervorrichtung in einer schematischen perspektivischen Darstellung,
- Fig. 2: einen Wischarmadapter und eine Waschwasserkanaleinheit der Wischervorrichtung in einer schematischen perspektivischen Darstellung,
- Fig. 3: ein erstes Wischblattadapterelement und ein zweites Wischblattadapterelement eines Wischblattadapters der Wischervorrichtung, ein Wischblattbauteil und eine Sprüheinheit der Wischervorrichtung in einer schematischen Explosionsdarstellung,
- Fig. 4: die Sprüheinheit und das zweite Wischblattadapterelement in einem Montageschritt in einer schematischen perspektivischen Darstellung,
- Fig. 5: die Sprüheinheit und das zweite Wischblattadapterelement in einem montierten Zustand in einer schematischen perspektivischen Darstellung,
- Fig. 6: das Wischblattbauteil und das erste Wischblattadapterelement in einem Montageschritt in einer schematischen perspektivischen Darstellung,
- Fig. 7: das erste Wischblattadapterelement, welches mit dem Wischblattbauteil verbunden ist, und das zweite Wischblattadapterelement, welches mit der Sprüheinheit verbunden ist, in einem Montageschritt in einer schematischen perspektivischen Darstellung,
- Fig. 8: den Wischblattadapter, das Wischblattbauteil und die Sprüheinheit in einem montierten Zustand und den Wischarmadapter und die Waschwasserkanaleinheit, welche in dem Wischarmadapter angeordnet ist, in einem Montageschritt in einer schematischen perspektivischen Darstellung,
- Fig. 9: den Wischblattadapter und die Sprüheinheit in einem montierten Zustand und den Wischarmadapter und die Waschwasserkanaleinheit, welche in dem Wischarmadapter angeordnet ist, in einem Montageschritt in einer schematischen teilweise transparenten Darstellung,
- Fig. 10: den Wischblattadapter und die Sprüheinheit, den Wischarmadapter und die Waschwasserkanaleinheit, welche in dem Wischarmadapter angeordnet ist, in einem montierten Zustand in einer schematischen teilweise transparenten Darstellung,
- Fig. 11: den Wischblattadapter, das Wischblattbauteil, den Wischarmadapter, die Waschwasserkanaleinheit und die Sprüheinheit in einem Betriebszustand in einer schematischen teilweise transparenten Darstellung,
- Fig. 12: den Wischblattadapter, das Wischblattbauteil, den Wischarmadapter, die Waschwasserkanaleinheit und die Sprüheinheit in einem ersten Betriebszustand in einer schematischen teilweise transparenten Darstellung,
- Fig. 13: den Wischblattadapter, das Wischblattbauteil, den Wischarmadapter, die Waschwasserkanaleinheit und die Sprüheinheit in einem zweiten Betriebszustand in einer schematischen teilweise transparenten Darstellung und
- Fig. 14: den Wischblattadapter, das Wischblattbauteil, den Wischarmadapter, die Waschwasserkanaleinheit und die Sprüheinheit in einem dritten Betriebszustand in einer schematischen teilweise transparenten Darstellung.

### Beschreibung des Ausführungsbeispiels

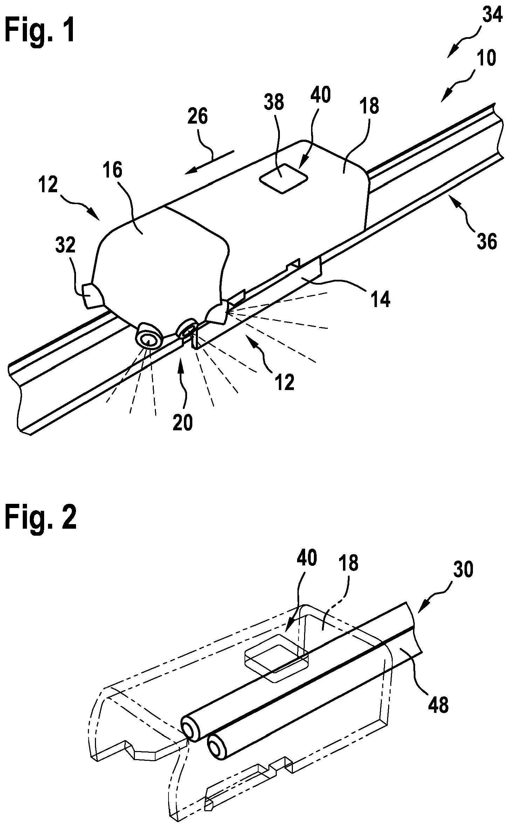

Fig. 1 zeigt einen Wischer 34 mit einer Wischervorrichtung 10. Die Wischervorrichtung 10 weist ein Wischblattbauteil 36 auf. Das Wischblattbauteil 36 ist dazu vorgesehen, in einem Betriebszustand über eine zu wischende Scheibe bewegt zu werden. In dem Betriebszustand ist das Wischblattbauteil 36 in Kontakt mit der zu wischenden Scheibe angeordnet.

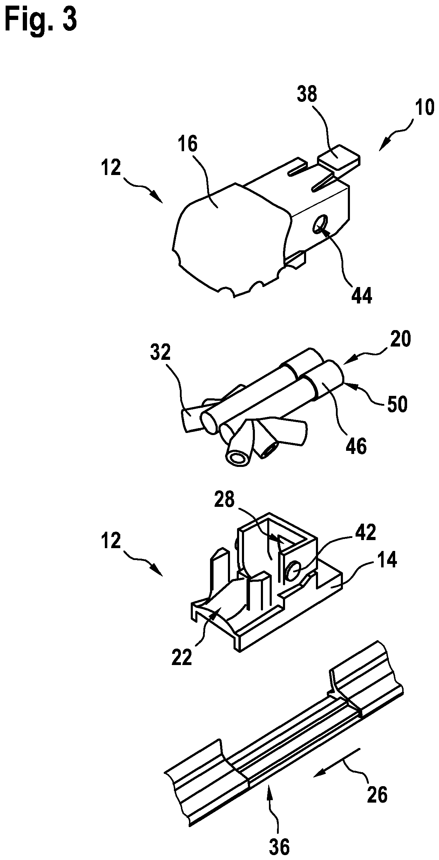

Die Wischervorrichtung 10 weist einen Wischblattadapter 12 auf. Der Wischblattadapter 12 weist ein erstes Wischblattadapterelement 14 und ein zweites Wischblattadapterelement 16 auf (vgl. Fig. 1 und 3). Das erste Wischblattadapterelement 14 ist zu einer Verbindung mit dem Wischblattbauteil 36 vorgesehen.

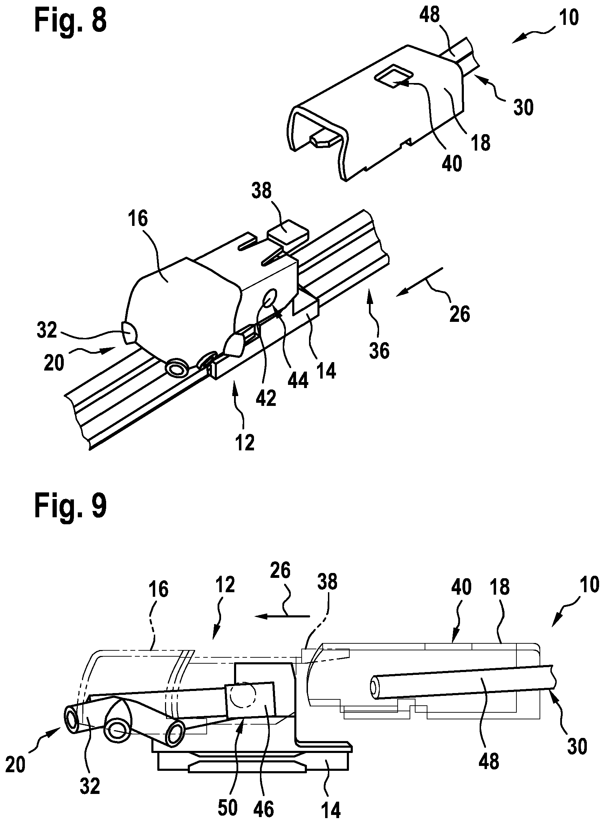

Das zweite Wischblattadapterelement 16 ist in dem montierten Zustand mit dem ersten Wischblattadapterelement 14 verbunden. Das erste Wischblattadapterelement 14 weist einen Lagerbolzen 42 auf. Das zweite Wischblattadapterelement 16 weist eine Lagerausnehmung 44 auf. In dem montierten Zustand greift der Lagerbolzen 42 teilweise in die Lagerausnehmung 44 ein (vgl. Fig. 8).

Der Lagerbolzen 42 definiert eine Schwenkachse (nicht dargestellt). In dem montierten Zustand ist das zweite Wischblattadapterelement 16 schwenkbar um die Lagerachse relativ zu dem ersten Wischblattadapterelement 14 an dem ersten Wischblattadapterelement 14 gelagert.

Das zweite Wischblattadapterelement 16 ist zu einer Verbindung mit einem Wischarmadapter 18 vorgesehen. Die Wischervorrichtung 10 weist den Wischarmadapter 18 auf (vgl. Fig. 1 und 2). In dem montierten Zustand sind der Wischarmadapter 18 und das zweite Wischblattadapterelement 16 miteinander verbunden. Der Wischarmadapter 18 ist in dem montierten Zustand an dem zweiten Wischblattadapterelement 16 befestigt. In dem montierten Zustand ist der Wischarmadapter 18 mittels einer Rastverbindung an dem zweiten Wischblattadapterelement 16 befestigt.

Das zweite Wischblattadapterelement 16 weist ein zweites Rastelement 38 auf, das dazu vorgesehen ist, mit einem Wischarmadapter-Rastelement 40 des Wischarmadapters 18 gekoppelt zu werden. Das zweite Rastelement 38 ist dazu vorgesehen, bei einem Befestigungsvorgang elastisch ausgelenkt zu werden, um anschließend durch eine innere Spannkraft hinter dem Wischarmadapter-Rastelement 40 einzurasten. Das Wischarmadapter-Rastelement 40 ist als eine Rastausnehmung ausgebildet.

Die Wischervorrichtung 10 weist eine Sprüheinheit 20 auf (vgl. Fig. 1 und 3). Die Sprüheinheit 20 ist dazu vorgesehen, in dem Betriebszustand Waschwasser auf die zu wischende Scheibe aufzusprühen. In dem montierten Zustand ist die Sprüheinheit 20 teilweise zwischen dem ersten Wischblattadapterelement 14 und dem zweiten Wischblattadapterelement 16 angeordnet.

In einem Verfahren zu einer Montage der Wischervorrichtung 10 wird die Sprüheinheit 20 teilweise zwischen dem ersten Wischblattadapterelement 14 und dem zweiten Wischblattadapterelement 16 angeordnet (vgl. Fig. 3 bis 8). Die Sprüheinheit 20 wird mit dem zweiten Wischblattadapterelement 16 verbunden. In dem montierten Zustand ist die Sprüheinheit 20 mit dem zweiten Wischblattadapterelement 16 verbunden.

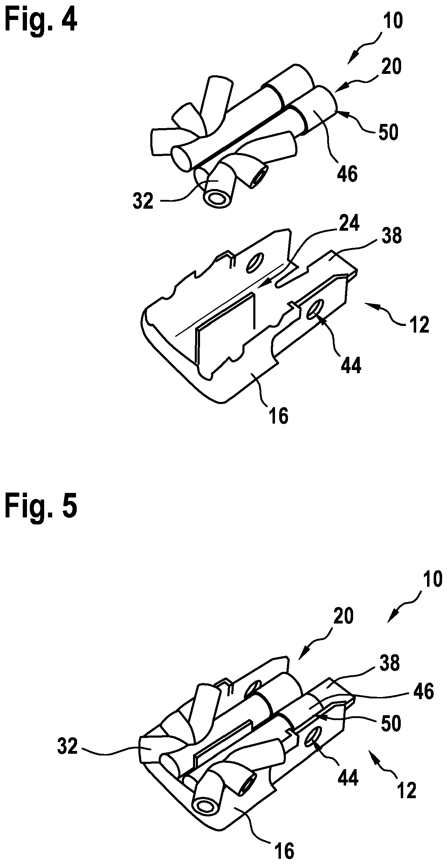

Das zweite Wischblattadapterelement 16 weist einen zweiten Aufnahmebereich 24 auf. Die Sprüheinheit 20 wird in dem Verfahren in den zweiten Aufnahmebereich 24 eingebracht (vgl. Fig. 4 und 5). Der zweite Aufnahmebereich 24 nimmt in dem montierten Zustand einen Großteil der Sprüheinheit 20 auf. In dem montierten Zustand ist die Sprüheinheit 20 zu einem Großteil von dem zweiten Wischblattadapterelement 16 umgeben.

Die Sprüheinheit 20 ist in dem montierten Zustand mit einer den zweiten Aufnahmeraum 24 begrenzenden Wandung des zweiten Wischblattadapterelements 16 verbunden. Im vorliegenden Ausführungsbeispiel ist die Sprüheinheit 20 in dem montierten Zustand mittels einer Rastverbindung mit dem zweiten Wischblattadapterelement 16 verbunden.

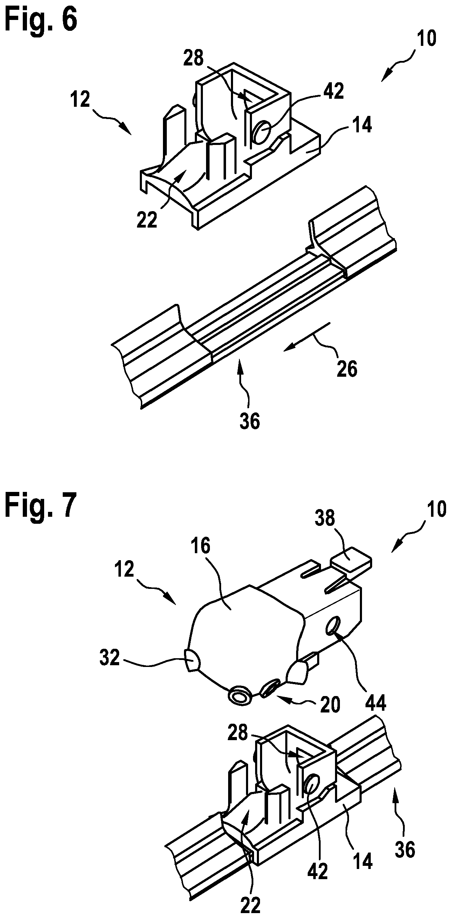

Das erste Wischblattadapterelement 14 wird in dem Verfahren mit dem Wischblattbauteil 36 verbunden (vgl. Fig. 6). Das Wischblattbauteil 36 weist einen Verbindungsbereich auf, welcher zu einer Verbindung mit dem ersten Wischblattadapterelement 14 vorgesehen ist.

In dem Verfahren wird das zweite Wischblattadapterelement 16 mitsamt der mit dem zweiten Wischblattadapterelement 16 verbundenen Sprüheinheit 20 mit dem ersten Wischblattadapterelement 14 verbunden (vgl. Fig. 7). In dem montierten Zustand ist die Sprüheinheit 20 im Wesentlichen von allen Seiten von den Wischblattadapterelementen 14, 16 umgeben.

Das erste Wischblattadapterelement 14 weist einen ersten Aufnahmebereich 22 auf. Der erste Aufnahmebereich 22 nimmt in dem montierten Zustand einen Teil der Sprüheinheit 20 auf. Der erste Aufnahmebereich 22 und der zweite Aufnahmebereich 24 definieren gemeinsam einen Gesamtaufnahmebereich für die Sprüheinheit 20. In dem montierten Zustand bildet das erste Wischblattadapterelement 14 teilweise eine der zu wischenden Scheibe zugewandte, insbesondere untere Wandung, insbesondere einen Boden, des Gesamtaufnahmebereichs.

In dem montierten Zustand ist ein Teil der Sprüheinheit 20 in einer der zu wischenden Scheibe zugewandten Vertikalrichtung oberhalb des ersten Wischblattadapterelements 14 angeordnet. Die Vertikalrichtung ist in dem montierten Zustand senkrecht zu der zu wischenden Scheibe ausgerichtet.

Ein weiterer Teil der Sprüheinheit 20 ist in dem montierten Zustand in der der zu wischenden Scheibe zugewandten Vertikalrichtung freistehend angeordnet (vgl. Fig. 8). Die Sprüheinheit 20 ragt in dem montierten Zustand in einer Wischblattlängsrichtung 26 teilweise über das erste Wischblattadapterelement 14 hinaus.

Im vorliegenden Ausführungsbeispiel weist die Sprüheinheit 20 sechs Düsenelemente 32 auf. Von mehrfach vorhandenen Objekten ist in den Figuren jeweils lediglich eines mit einem Bezugszeichen versehen. Die Düsenelemente 32 sind in dem montierten Zustand im Wesentlichen in dem weiteren Teil der Sprüheinheit 20 angeordnet, welcher über das erste Wischblattadapterelement 14 hinausragt.

In einer Längssymmetrieebene sind die Düsenelemente 32 symmetrisch angeordnet. Die Längssymmetrieebene ist in dem montierten Zustand im Wesentlichen senkrecht zu der zu wischenden Scheibe ausgerichtet. Die Längssymmetrieebene ist in dem montierten Zustand im Wesentlichen parallel zu der Wischblattlängsrichtung 26 ausgerichtet.

Auf jeder Seite der Längssymmetrieebene ist eine Gruppe von Düsenelementen 32 angeordnet. Jede Gruppe von Düsenelementen 32 weist drei Düsenelemente 32 auf. Auf einer ersten Seite der Längssymmetrieebene ist eine erste Gruppe von Düsenelementen 32 angeordnet. Auf einer zweiten, der ersten Seite in der Wischrichtung gegenüberliegenden Seite der Längssymmetrieebene ist eine zweite Gruppe von Düsenelementen 32 angeordnet. In dem Betriebszustand versprühen die Düsenelemente 32 Waschwasser in unterschiedlichen Richtungen auf die zu wischende Scheibe.

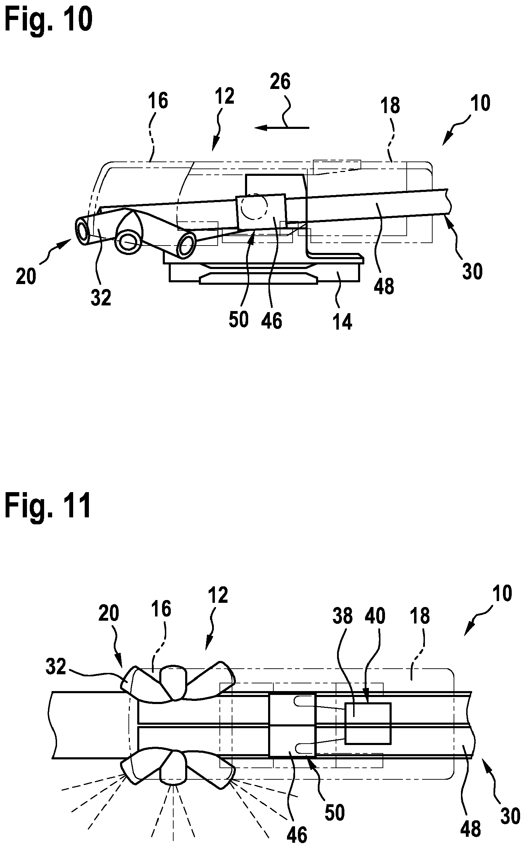

In der Wischblattlängsrichtung 26 sind die Düsenelemente 32 jeder Gruppe benachbart angeordnet. Ein mittleres der benachbart angeordneten Düsenelemente 32 weist eine Sprührichtung auf, die im Wesentlichen parallel zu einer Wischrichtung ausgerichtet ist (vgl. Fig. 1 und 11). Die zu dem mittleren Düsenelement 32 in der Wischblattlängsrichtung 26 benachbart angeordneten Düsenelemente 32 weisen jeweils eine Sprührichtung auf, die schräg relativ zu der Wischrichtung ausgerichtet ist.

In einer Quersymmetrieebene sind die Düsenelemente 32 symmetrisch angeordnet. Die Quersymmetrieebene ist in dem montierten Zustand im Wesentlichen senkrecht zu der zu wischenden Scheibe ausgerichtet. Die Quersymmetrieebene ist in dem montierten Zustand im Wesentlichen senkrecht zu der Wischblattlängsrichtung 26 ausgerichtet.

Die Sprüheinheit weist eine Waschwasserkanalanschlusseinheit 50 auf. Pro Gruppe von Düsenelementen 32 weist die Waschwasserkanalanschlusseinheit 50 ein Waschwasserkanalanschlusselement 46 auf. Die Waschwasserkanalanschlusseinheit 50 weist zwei Waschwasserkanalanschlusselemente 46 auf. Die Waschwasserkanalanschlusselemente 46 sind jeweils zu einer Verbindung mit einem Waschwasserkanalelement 48 vorgesehen.

Die Wischervorrichtung 10 weist eine Waschwasserkanaleinheit 30 auf. Die Waschwasserkanaleinheit 30 weist die Waschwasserkanalelemente 48 auf. Im vorliegenden Ausführungsbeispiel weist die Waschwasserkanaleinheit 30 zwei Waschwasserkanalelemente 48 auf.

Alternativ könnte die Waschwasserkanaleinheit ein insbesondere einziges Waschwasserkanalelement aufweisen. Die Sprüheinheit könnte insbesondere ein Waschwasserkanalanschlusselement aufweisen, welches zu einer Verbindung mit dem Waschwasserkanalelement vorgesehen sein könnte.

Die Waschwasserkanaleinheit 30 ist in dem montierten Zustand mit dem Wischblattadapter 18 verbunden. In dem montierten Zustand erstreckt sich die Waschwasserkanaleinheit 30 im Wesentlichen innerhalb des Wischarmadapters 18. In einem der Sprüheinheit 20 zugewandten Endbereich des Wischarmadapters 18 ist die Waschwasserkanaleinheit 30 in dem montierten Zustand fest in dem Wischarmadapter 18 angeordnet.

In dem montierten Zustand greift die Waschwasserkanaleinheit 30 teilweise durch eine Durchgriffsausnehmung 28 des ersten Wischblattadapterelements 14 hindurch. Das erste Wischblattadapterelement 14 weist die Durchgriffsausnehmung 28 für die Waschwasserkanaleinheit 30 auf.

In dem Verfahren wird der Wischarmadapter 18 mit dem zweiten Wischblattadapterelement 16 verbunden. Bei Annäherung des Wischarmadapters 18 in der Wischblattlängsrichtung 26 an das zweite Wischblattadapterelement 16 greift die Waschwasserkanaleinheit 30 teilweise durch die Durchgriffsausnehmung 28 hindurch.

Die Waschwasserkanaleinheit 30 greift aufgrund der festen Anordnung in dem der Sprüheinheit 20 zugewandten Endbereich des Wischarmadapters 18 bei einer Verbindung des Wischarmadapters 18 mit dem zweiten Wischblattadapterelement 16 automatisch in die Waschwasserkanalanschlusseinheit 50 ein (vgl. Fig. 8 und 9).

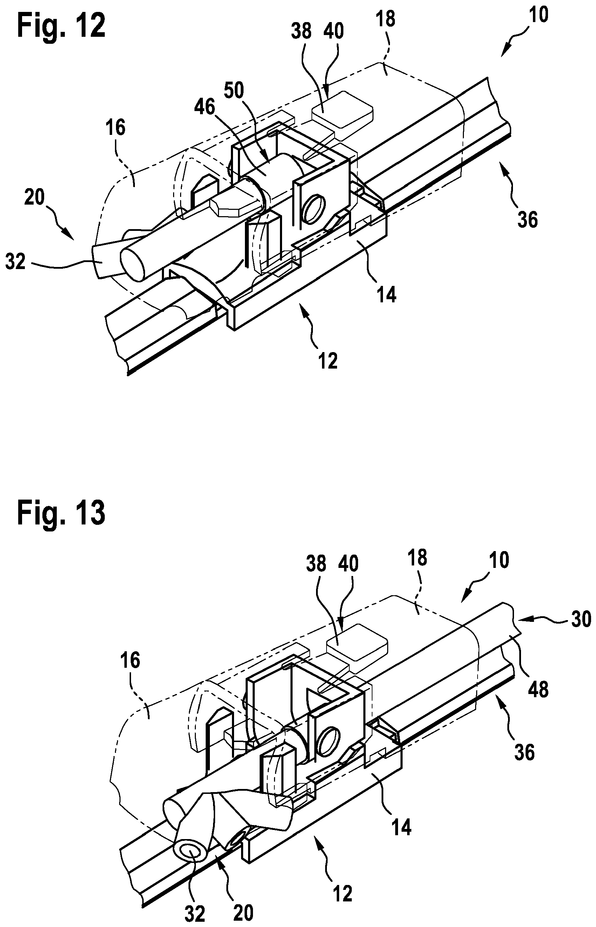

Die Sprüheinheit 20 ist dazu vorgesehen, in dem Betriebszustand bei einer Aufwärtsbewegung des Wischers 34 mittels der ersten Gruppe von Düsenelementen 32 in Bewegungsrichtung Waschwasser auf die zu wischende Scheibe zu versprühen (vgl. Fig. 12). Die erste Gruppe von Düsenelementen 32 wird von einem ersten Waschwasserkanalelement 46 versorgt.

Die Sprüheinheit 20 ist dazu vorgesehen, in dem Betriebszustand bei einer Abwärtsbewegung des Wischers 34 mittels der zweiten Gruppe von Düsenelementen 32 in Bewegungsrichtung Waschwasser auf die zu wischende Scheibe zu versprühen (vgl. Fig. 13). Die zweite Gruppe von Düsenelementen 32 wird von einem zweiten Waschwasserkanalelement 46 versorgt.

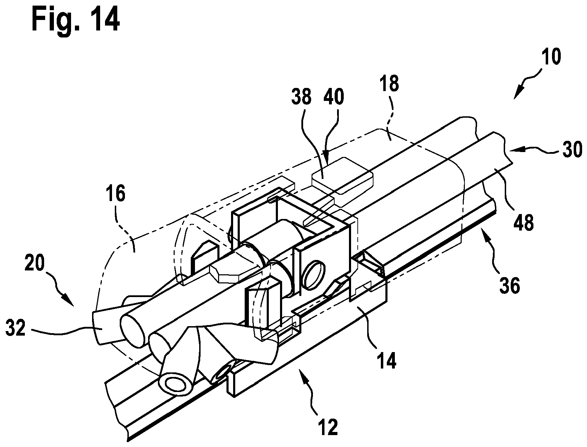

Die Sprüheinheit 20 könnte dazu vorgesehen sein, in dem Betriebszustand, insbesondere bei einer schnellen Abfolge zwischen einer Aufwärtsbewegung und einer Abwärtsbewegung des Wischers 34, mittels der ersten Gruppe von Düsenelementen 32 und der zweiten Gruppe von Düsenelementen 32 Waschwasser auf die zu wischende Scheibe zu versprühen (vgl. Fig. 14).

## Patentansprüche

1. Wischervorrichtung mit einem Wischblattadapter (12), welcher zumindest ein erstes Wischblattadapterelement (14) und zumindest ein zweites Wischblattadapterelement (16) aufweist, welches in wenigstens einem montierten Zustand mit dem ersten Wischblattadapterelement (14) verbunden und zu einer Verbindung mit zumindest einem Wischarmadapter (18) vorgesehen ist, und mit einer Sprüheinheit (20) die in dem montierten Zustand wenigstens teilweise zwischen dem ersten Wischblattadapterelement (14) und dem zweiten Wischblattadapterelement (16) angeordnet ist, wobei die Sprüheinheit (20) zumindest ein eine Düsenöffnung aufweisendes Düsenelement (32) aufweist, **dadurch gekennzeichnet, dass** die Sprüheinheit (20) in dem montierten Zustand mit dem zweiten Wischblattadapterelement (16) verbunden und im Wesentlichen von allen Seiten von den Wischblattadapterelementen (14, 16) umgeben ist.

2. Wischervorrichtung nach Anspruch 1, **dadurch gekennzeichnet, dass** die Sprüheinheit (20) in dem montierten Zustand mit dem zweiten Wischblattadapterelement (16) verbunden ist.

3. Wischervorrichtung nach Anspruch 2, **dadurch gekennzeichnet, dass** die Sprüheinheit (20) in dem montierten Zustand mit dem zweiten Wischblattadapterelement (16) mittels einer Rastverbindung verbunden ist.

4. Wischervorrichtung nach einem der vorhergehenden Ansprüche, **dadurch gekennzeichnet, dass** das erste Wischblattadapterelement (14) zumindest einen ersten Aufnahmebereich (22) definiert, der dazu vorgesehen ist, in dem montierten Zustand zumindest einen Teil der Sprüheinheit (20) aufzunehmen.

5. Wischervorrichtung nach einem der vorhergehenden Ansprüche, **dadurch gekennzeichnet, dass** das zweite Wischblattadapterelement (16) zumindest einen zweiten Aufnahmebereich (24) definiert, der dazu vorgesehen ist, in dem montierten Zustand zumindest einen Großteil der Sprüheinheit (20) aufzunehmen.

6. Wischervorrichtung nach einem der vorhergehenden Ansprüche, **dadurch gekennzeichnet, dass** die Sprüheinheit (20) in dem montierten Zustand in einer Wischblattlängsrichtung (26) wenigstens teilweise über das erste Wischblattadapterelement (14) hinausragt.

7. Wischervorrichtung nach einem der vorhergehenden Ansprüche, **dadurch gekennzeichnet, dass** das erste Wischblattadapterelement (14) zumindest eine Durchgriffsausnehmung (28) für zumindest eine Waschwasserkanaleinheit (30) aufweist.

8. Wischervorrichtung nach einem der vorhergehenden Ansprüche, **gekennzeichnet durch** den Wischarmadapter (18) und durch zumindest eine Waschwasserkanaleinheit (30), welche in wenigstens einem montierten Zustand zumindest in einem der Sprüheinheit (20) zugewandten Endbereich des Wischarmadapters (18) fest in dem Wischarmadapter (18) angeordnet ist.

9. Wischervorrichtung nach einem der vorhergehenden Ansprüche, **dadurch gekennzeichnet, dass** die Sprüheinheit (20) zumindest vier Düsenelemente (32) aufweist, welche dazu vorgesehen sind, Waschwasser in unterschiedliche Richtungen zu versprühen.

10. Wischer mit zumindest einer Wischervorrichtung (10) nach einem der Ansprüche 1 bis 9.

11. Verfahren zu einer Montage zumindest einer Wischervorrichtung (10) nach einem der Ansprüche 1 bis 9, mit einem Wischblattadapter, welcher zumindest ein erstes Wischblattadapterelement (14) und zumindest ein zweites Wischblattadapterelement (16) aufweist, welches mit dem ersten Wischblattadapterelement (14) verbunden wird und welches zu einer Verbindung mit zumindest einem Wischarmadapter (18) vorgesehen ist, und mit einer Sprüheinheit (20), **dadurch gekennzeichnet, dass** die Sprüheinheit (20) wenigstens teilweise zwischen dem ersten Wischblattadapterelement (14) und dem zweiten Wischblattadapterelement (16) angeordnet wird.

## Claims

1. Wiper device comprising a wiper blade adapter (12) having at least one first wiper blade adapter element (14) and at least one second wiper blade adapter element (16) which is connected to the first wiper blade adapter element (14) in at least one assembled state and is provided for connecting to at least one wiper arm adapter (18), and comprising a spraying unit (20) which, in the assembled state, is arranged at least partially between the first wiper blade adapter element (14) and the second wiper blade adapter element (16), wherein the spraying unit (20) has at least one nozzle element (32) having a nozzle opening, **characterized in that**, in the assembled state, the spraying unit (20) is connected to the second wiper blade adapter element (16) and is substantially surrounded on all sides by the wiper blade adapter elements (14, 16).

2. Wiper device according to Claim 1, **characterized in that** in the assembled state the spraying unit (20) is connected to the second wiper blade adapter element (16).

3. Wiper device according to Claim 2, **characterized in that** in the assembled state the spraying unit (20) is connected to the second wiper blade adapter element (16) by means of a latching connection.

4. Wiper device according to one of the preceding claims, **characterized in that** the first wiper blade adapter element (14) defines at least one first receiving region (22) which is provided in the assembled state to receive at least one part of the spraying unit (20).

5. Wiper device according to one of the preceding claims, **characterized in that** the second wiper blade adapter element (16) defines at least one second receiving region (24) which is provided in the assembled state to receive at least a substantial part of the spraying unit (20).

6. Wiper device according to one of the preceding claims, **characterized in that** in the assembled state the spraying unit (20) protrudes in a wiper blade longitudinal direction (26) at least partially over the first wiper blade adapter element (14) .

7. Wiper device according to one of the preceding claims, **characterized in that** the first wiper blade adapter element (14) comprises at least one through-recess (28) for at least one washer fluid channel unit (30).

8. Wiper device according to one of the preceding claims, **characterized by** the wiper arm adapter (18) and by at least one washer fluid channel unit (30) which in at least one assembled state is fixedly arranged in at least an end region of the wiper arm adapter (18) facing the spraying unit (20) in the wiper arm adapter (18).

9. Wiper device according to one of the preceding claims, **characterized in that** the spraying unit (20) comprises at least four nozzle elements (32) which are provided to spray washer fluid in different directions.

10. Wiper having at least one wiper device (10) according to one of Claims 1 to 9.

11. Method for the assembly of at least one wiper device (10) according to one of Claims 1 to 9, comprising a wiper blade adapter having at least one first wiper blade adapter element (14) and at least one second wiper blade adapter element (16) which is connected to the first wiper blade adapter element (14) and which is provided for connecting to at least one wiper arm adapter (18), and comprising a spraying unit (20), **characterized in that** the spraying unit (20) is arranged at least partially between the first wiper blade adapter element (14) and the second wiper blade adapter element (16).

## Revendications

1. Dispositif d'essuie-glace comprenant un adaptateur de balai d'essuie-glace (12) qui présente au moins un premier élément adaptateur de balai d'essuie-glace (14) et au moins un deuxième élément adaptateur de balai d'essuie-glace (16) qui, dans au moins un état monté, est raccordé au premier élément adaptateur de balai d'essuie-glace (14) et qui est prévu pour être raccordé à au moins un adaptateur de bras d'essuie-glace (18), comprenant une unité de pulvérisation (20) qui, dans l'état monté, est disposée au moins en partie entre le premier élément adaptateur de balai d'essuie-glace (14) et le deuxième élément adaptateur de balai d'essuie-glace (16), l'unité de pulvérisation (20) présentant au moins un élément de buse (32) présentant une ouverture de buse, **caractérisé en ce que** l'unité de pulvérisation (20), dans l'état monté, est raccordée au deuxième élément adaptateur de balai d'essuie-glace (16) et est essentiellement entourée de tous les côtés par les éléments adaptateurs de balai d'essuie-glace (14, 16).

2. Dispositif d'essuie-glace selon la revendication 1, **caractérisé en ce que** l'unité de pulvérisation (20), dans l'état monté, est raccordée au deuxième élément adaptateur de balai d'essuie-glace (16).

3. Dispositif d'essuie-glace selon la revendication 2, **caractérisé en ce que** l'unité de pulvérisation (20), dans l'état monté, est raccordée au deuxième élément adaptateur de balai d'essuie-glace (16) au moyen d'une connexion par encliquetage.

4. Dispositif d'essuie-glace selon l'une quelconque des revendications précédentes, **caractérisé en ce que** le premier élément adaptateur de balai d'essuie-glace (14) définit au moins une première région de réception (22) qui est prévue pour recevoir, dans l'état monté, au moins une partie de l'unité de pulvérisation (20).

5. Dispositif d'essuie-glace selon l'une quelconque des revendications précédentes, **caractérisé en ce que** le deuxième élément adaptateur de balai d'essuie-glace (16) définit au moins une deuxième région de réception (24) qui est prévue pour recevoir, dans l'état monté, au moins une majeure partie de l'unité de pulvérisation (20).

6. Dispositif d'essuie-glace selon l'une quelconque des revendications précédentes, **caractérisé en ce que** l'unité de pulvérisation (20), dans l'état monté, dépasse au moins en partie au-delà du premier élément adaptateur de balai d'essuie-glace (14) dans une direction longitudinale du balai d'essuie-glace (26).

7. Dispositif d'essuie-glace selon l'une quelconque des revendications précédentes, **caractérisé en ce que** le premier élément adaptateur de balai d'essuie-glace (14) présente au moins un évidement (28) pour le passage d'au moins une unité de canal d'eau de lavage (30).

8. Dispositif d'essuie-glace selon l'une quelconque des revendications précédentes, **caractérisé par** l'adaptateur de bras d'essuie-glace (18) et par au moins une unité de canal d'eau de lavage (30) qui, dans au moins un état monté, est disposée fixement dans l'adaptateur de bras d'essuie-glace (18) au moins dans une région d'extrémité de l'adaptateur de bras d'essuie-glace (18) tournée vers l'unité de pulvérisation (20).

9. Dispositif d'essuie-glace selon l'une quelconque des revendications précédentes, **caractérisé en ce que** l'unité de pulvérisation (20) présente au moins quatre éléments de buse (32) qui sont prévus pour pulvériser de l'eau de lavage dans différentes directions.

10. Essuie-glace comprenant au moins un dispositif d'essuie-glace (10) selon l'une quelconque des revendications 1 à 9.

11. Procédé pour le montage d'au moins un dispositif d'essuie-glace (10) selon l'une quelconque des revendications 1 à 9, comprenant un adaptateur de balai d'essuie-glace qui présente au moins un premier élément adaptateur de balai d'essuie-glace (14) et au moins un deuxième élément adaptateur de balai d'essuie-glace (16) qui est raccordé au premier élément adaptateur de balai d'essuie-glace (14) et qui est prévu pour être raccordé à au moins un adaptateur de bras d'essuie-glace (18), comprenant une unité de pulvérisation (20), **caractérisé en ce que** l'unité de pulvérisation (20) est disposée au moins en partie entre le premier élément adaptateur de balai d'essuie-glace (14) et le deuxième élément adaptateur de balai d'essuie-glace (16).
